# EUROPEAN PATENT APPLICATION

(11) **EP 1 970 275 A2**
(43) Date of publication of application: **17.09.2008**
(21) Application number: 08001195.0
(22) Date of filing: 23.01.2008
(51) Int. Cl.: B60W 20/00, B60K 6/52

(54) **Vehicle drive system**

(30) Priority: 13.03.2007 JP 2007062919
(71) Applicant: Hitachi, Ltd., Chiyoda-ku Tokyo 100-8280 (JP)
(72) Inventor: Yamamoto, Tatsuyuki, Tokyo 100-8220 (JP); Matsuzaki, Norikazu, Tokyo 100-8220 (JP)
(74) Representative: Matias, Bruno M.

(57) **Abstract**

An object of the present invention is to provide a vehicle drive system that is capable of appropriately continuing four-wheel drive according to driver's intention and road conditions. The vehicle drive system includes a motor 5 which drives rear wheels 15R and 15L, and a 4WDCU 6 for controlling the electric energy inputted to the motor to control the motor drive. When the driver issues a request command for continuing four-wheel drive or when the road condition of the vehicle changes, a control logic 200 of the 4WDCU 6 continues a four-wheel drive mode in which the rear wheels are driven by the motor 5 and the front wheels by an internal combustion engine 1.

## Description

### BACKGROUND OF THE INVENTION

### 1. Field of the Invention

The present invention relates to a vehicle drive system, and typically to a technique for improving the running performance of a vehicle.

### 2. Description of the Related Art

A technique disclosed, for example, in JP-A-2005-186756 is known as background art related to a vehicle drive system. JP-A-2005-186756 discloses a control technique for changeover between two-wheel and four-wheel drive in a four-wheel drive system which drives the front wheels with an engine and the rear wheels with a motor. With the technique, the accelerator opening turns ON when the vehicle is started and, until the wheel speed reaches a predetermined value, the starting performance is improved in the four-wheel drive mode in which the front wheels are driven by an engine and the rear wheels by a motor. When the wheel speed increases and reaches the predetermined value, the motor driving torque is decreased and then the engine-based two-wheel drive mode is selected.

### SUMMARY OF THE INVENTION

With the technique disclosed in JP-A-2005-186756, when the wheel speed exceeds a predetermined value, the motor operation is stopped and then the engine-based two-wheel drive is selected. Likewise, two-wheel drive is selected when the accelerator opening turns OFF.

However, with such changeover from the four-wheel drive to two-wheel drive, two-wheel drive is selected contrary to driver's intention although continuing four-wheel drive stabilizes the vehicle. Therefore, on a road surface having a low friction coefficient such as a road with compacted snow or frozen road, a behavior of the vehicle different from steering or a skid occurs again, causing a feeling of insecurity of the driver regardless of the acceleration operation by the driver.

Further, when the vehicle reaches a curve section of the road while climbing up a slope, the driver closes the accelerator opening to decelerate the vehicle. After the vehicle has passed the curve section, the driver frequently depresses the accelerator pedal again. In this case, by closing the accelerator opening, the drive mode is changed over from four-wheel drive to two-wheel drive even if the vehicle speed has not reached a predetermined value. At this time, the motor and the differential gear are mechanically disconnected by the clutch, and the driving force of the rear wheels by the motor is lost. When the accelerator pedal is depressed next time, the drive mode is changed over from two-wheel drive to four-wheel drive. However, the problem with this is as follows: Even if the clutch is mechanically engaged, it takes time until the rotational speed of the motor reaches the wheel speed, resulting in insufficient response and making it impossible to obtain intended acceleration regardless of the acceleration operation by the driver.

With the conventional four-wheel automatic drive control, as mentioned above, although the running performance is improved further by continuing four-wheel drive, two-wheel drive is selected. Therefore, the advent of a drive control system which can improve the running performance further than automatic four-wheel drive control has been demanded.

A typical piece of the present invention provides a vehicle drive system which can improve the running performance of the vehicle.

A typical piece of the present invention is characterized in that, if the driver issues a request command for continuing a second drive mode (a mode in which the first wheels are driven by an internal combustion engine and the second wheels by a motor) or if the road condition of the vehicle changes, the motor drive is controlled so as to continue the vehicle running in the second drive mode.

In accordance with a typical piece of the present invention, it is possible to stabilize the vehicle running, thereby improving the running performance of the vehicle.

Further, in accordance with a typical piece of the present invention, it is possible to stabilize the vehicle running, thereby improving the safety of the vehicle running.

### BRIEF DESCRIPTION OF THE DRAWINGS

Fig. 1 is a diagram showing a system configuration of a four-wheel drive vehicle using a four-wheel drive system according to a first embodiment of the present invention.
Fig. 2 is a block diagram showing a configuration of a four-wheel drive control unit for forming the four-wheel drive system according to the first embodiment of the present invention.
Fig. 3 is a circuit diagram showing a configuration of a switch determination unit of the four-wheel-drive control unit according to the first embodiment of the present invention.
Fig. 4 is a timing chart showing operations of the switch determination unit of the four-wheel drive control unit according to the first embodiment of the present invention.
Fig. 5 is a flow chart showing operations of a control logic of the four-wheel drive control unit according to the first embodiment of the present invention.
Fig. 6 is a block diagram showing a configuration of a motor control unit of the four-wheel drive control unit according to the first embodiment of the present invention.
Fig. 7 is a flow chart showing details of motor temperature rise limit control in the four-wheel drive control unit according to the first embodiment of the present invention.
Fig. 8 is a control block diagram showing details of four-wheel vehicle speed limit control in the four-wheel drive control unit according to the first embodiment of the present invention.
Fig. 9 is a diagram showing characteristics of the four-wheel vehicle speed limit control in the four-wheel drive control unit according to the first embodiment of the present invention.
Fig. 10 is a flow chart showing details of four-wheel drive continuous control in a four-wheel drive system according to a second embodiment of the present invention.
Fig. 11 is a flow chart showing details of the four-wheel drive continuous control in a four-wheel drive system according to a third embodiment of the present invention.
Fig. 12 is a flow chart showing details of four-wheel drive automatic control in a four-wheel drive system according to a fourth embodiment of the present invention.

### DETAILED DESCRIPTION OF THE PREFERRED EMBODIMENTS

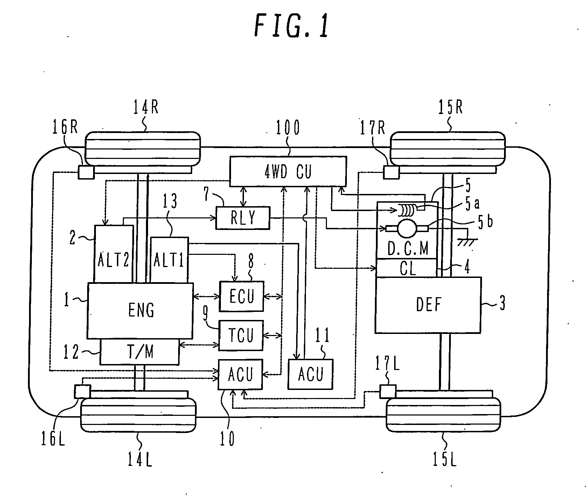

A configuration and operations of a four-wheel drive system according to a first embodiment of the present invention will be explained below with reference to Figs. 1 to 9. Although a case where the present invention is applied to a four-wheel drive system will be explained as an example, the present invention is applicable also to a drive system for six or more wheels. For example, the present invention is applicable also to a truck, a trailer, etc.

First, a configuration of a four-wheel drive vehicle using the four-wheel drive system according to the present embodiment will be explained below with reference to Fig. 1.

Fig. 1 is a diagram showing a system configuration of the four-wheel drive vehicle using the four-wheel drive system according to the first embodiment of the present invention.

The four-wheel drive vehicle is provided with an engine 1 and a DC motor 5. The driving force of the engine 1 is transmitted to right and left front wheels 14R and 14L through a transmission 12 and a first axle to drive the front wheels.

The driving force of the DC motor 5 is transmitted to right and left rear wheels 15R and 15L through a clutch 4, a differential gear 3, and a second axle to drive the rear wheels 15R and 15L. If the differential gear 3 and the clutch 4 are connected, the torque of the DC motor 5 is transmitted to the rear wheel shaft through the clutch 4 and the differential gear 3 to drive the rear wheels 15R and 15L. When the clutch 4 is disengaged, the DC motor 5 is mechanically disconnected from the rear wheels 15R and 15L, and the rear wheels 15R and 15L do not transmit the driving force to the road surface. The engagement and disengagement of the clutch 4 are controlled by a four-wheel drive control unit (4WDCU) 6. As the DC motor 5, for example, a DC shunt motor with easy forward/reverse rotation changeover or a separately excited DC motor is used.

Although the present embodiment has been explained as a four-wheel drive vehicle which drives the front wheels 14R and 14L with the engine 1 and the rear wheels 15R and 15L with the DC motor 5, it is also possible to drive the front wheels with the DC motor and the rear wheels with the engine. Further, the vehicle may be a mechanical four-wheel drive vehicle having a driving force control unit for the front and rear wheels for connection with a propeller shaft without using a DC motor.

In the engine room, an auxiliary alternator (ALT1) 13 which performs regular charging and generation and an auxiliary battery 11 are arranged. The auxiliary alternator 13 is driven by the engine 1 through a belt, and the output thereof is accumulated in the auxiliary battery 11.

Further, a driving high-power alternator (ALT2) 2 is disposed in the vicinity of the auxiliary alternator 13. The driving high-power alternator (ALT2) 2 is driven by the engine 1 through a belt, and the output thereof drives the DC motor 5. The power generation voltage of the driving high-power alternator (ALT2) 2 is controlled by the 4WDCU 6. If the generated power of the driving high-power alternator (ALT2) 2 changes, the DC motor torque which is an output of the DC motor 5 changes.

Specifically, when the 4WDCU 6 outputs an output command value (a duty signal with which the field current value of the alternator becomes a predetermined value) to the driving high-power alternator (ALT2) 2, the generated power of the driving high-power alternator (ALT2) 2 changes. The power generation voltage of the driving high-power alternator (ALT2) 2 is applied to an armature coil 5b of the DC motor 5, and the output (DC motor torque) of the DC motor 5 changes. The 4WDCU 6 controls the output (DC motor torque) of the DC motor 5 by controlling the output (generated power) of the high-power alternator 2.

Further, by subjecting the 4WDCU 6 to field weakening control of the field current to be sent to a field winding 5a of the DC motor 5 in regions in which the DC motor 5 rotates at high speeds, the DC motor 5 is directly controlled to allow high-speed rotation thereof.

The output of the engine 1 is controlled by an electronic control throttle driven by a command from an engine control unit (ECU) 8. An accelerator opening sensor (not shown) is provided at the electronic control throttle to detect the accelerator opening.

If a mechanically linked accelerator pedal and throttle are used instead of the electronic control throttle, it is possible to provide an accelerator opening sensor at the accelerator pedal. A transmission controller (TCU) 9 controls the transmission 12. The output of the accelerator opening sensor is captured by the 4WDCU 6.

Each of wheel speed sensors 16R, 16L, 17R, and 17L for detecting the rotational speed is respectively provided on each of the front wheels 14R and 14L and the rear wheels 15R and 15L. Further, an anti-lock brake actuator controlled by an anti-lock brake control unit (ACU) 10 is provided in the brake.

It may also be possible to acquire each signal line to the four-wheel drive control unit (4WDCU) 6 from an interface of the engine control unit (ECU) 8, a transmission control unit (TCU) 9, or other control units through an in-car LAN (CAN) bus.

A large-capacity relay (RLY) 7 is provided between the high-power alternator 2 and the DC motor 5 so as to disconnect the output of the high-power alternator 2. Opening and closing of the relay 7 are controlled by the 4WDCU 6.

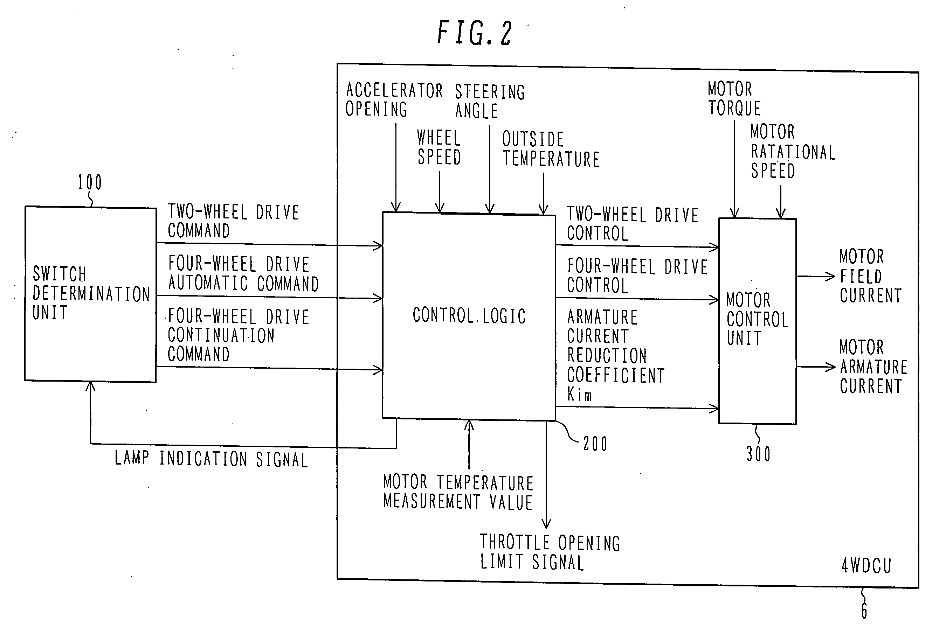

A configuration of the four-wheel drive control unit for forming the four-wheel drive system according to the present embodiment will be explained below with reference to Fig. 2.

Fig. 2 is a block diagram showing a configuration of the four-wheel drive control unit for forming the four-wheel drive system according to the first embodiment of the present invention.

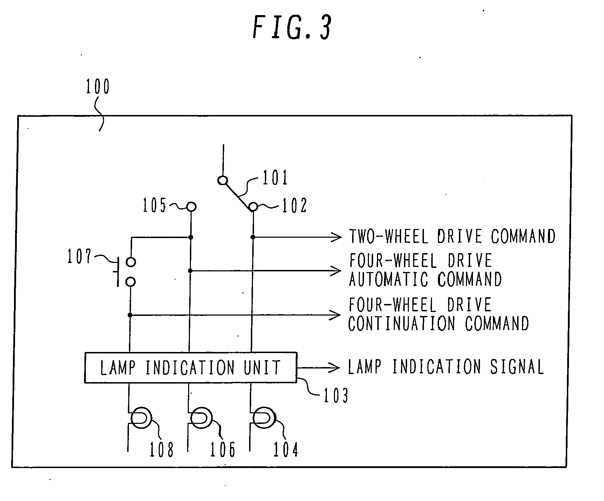

A determination unit 100 includes a switch operated by the driver, as mentioned later with reference to Fig. 3. The determination unit 100 outputs a two-wheel drive command for designating two-wheel drive control, a four-wheel drive automatic command for automatic changeover between four-wheel drive and two-wheel drive and continuing four-wheel drive, and a four-wheel drive continuation command for continuing four-wheel drive based on a designation from the driver.

In the four-wheel drive automatic control mode (four-wheel drive automatic command and the four-wheel drive automatic control), the changeover from two-wheel drive to four-wheel drive and vice versa and the continuation of the four-wheel drive are automatically performed by a determination unit (to be mentioned later) based on driving conditions regardless of a switch operation by the driver.

Further, in the four-wheel drive continuous mode (four-wheel drive continuation command and the four-wheel drive continuous control), the four-wheel drive control is continued giving priorities on the determination condition of the four-wheel drive automatic control by a switch operation by the driver. Four-wheel drive continuous control is terminated by different determination condition to be mentioned later and then the four-wheel drive automatic control is selected.

The four-wheel drive control unit (4WDCU) 6 is provided with a control logic 200 and a motor control unit 300.

The control logic 200 performs the steps of: inputting as input signals a two-wheel drive command, a four-wheel drive automatic command, and a four-wheel drive continuation command of the switch determination unit 100, and the accelerator opening, wheel speeds, outside temperature, and a motor temperature measurement value; transferring the designation of the two-wheel drive control and the four-wheel drive control to the motor control unit 200; and outputting an armature current reduction coefficient Kim for reducing an armature current to restrain temperature rise of the motor, and a lamp indication signal for indicating the four-wheel drive mode (the four-wheel drive automatic control or the four-wheel drive continuous control) to the determination unit 100.

Further, the control logic 200 outputs a throttle opening limit signal to a throttle control unit (not shown) in order to perform wheel speed limit control.

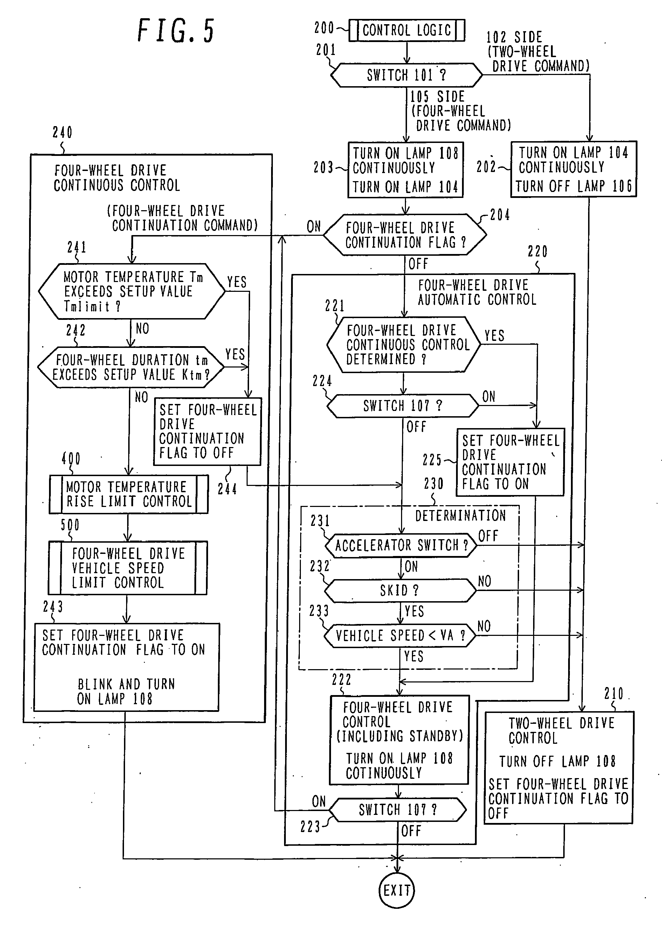

Details of control by the control logic 200 will be mentioned later with reference to Fig. 5.

The motor control unit 300 controls the clutch 4, the relay 7, and the armature current and field current of the motor 5 based on a two-wheel drive control request and a four-wheel drive control request from the control logic unit 200. Further, the motor control unit 300 controls the armature current by means of the armature current reduction coefficient Kim for reducing the armature current in order to restrain temperature rise of the motor.

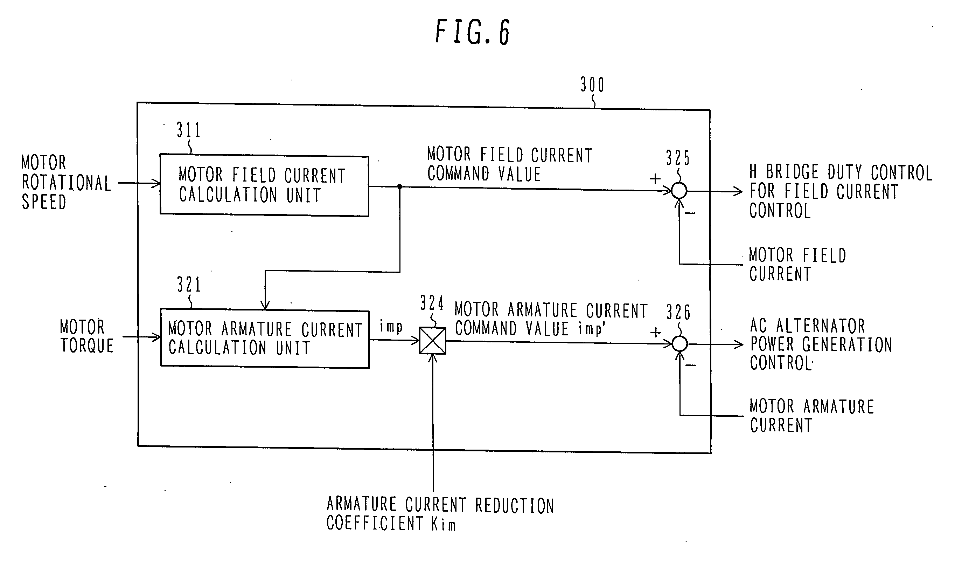

Details of control by the motor control unit 300 will be mentioned later with reference to Fig. 6.

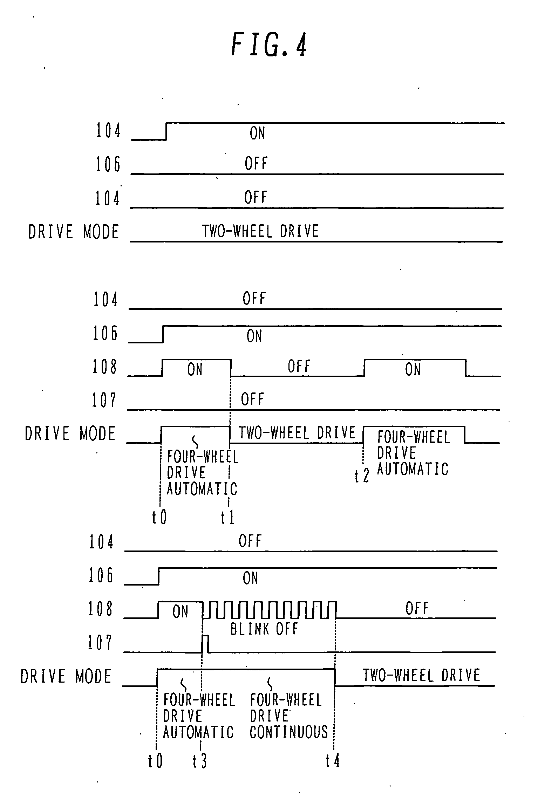

Then, the configuration and operations of the switch determination unit 100 of the four-wheel drive control unit according to the present embodiment will be explained below with reference to Figs. 3 and 4.

Fig. 3 is a circuit diagram showing a configuration of the switch determination unit of the four-wheel drive control unit according to the first embodiment of the present invention. Fig. 4 is a timing chart showing operations of the switch determination unit of the four-wheel drive control unit according to the first embodiment of the present invention.

Fig. 4A is a diagram showing operations when the driver sets a two-/four-wheel drive selector switch 101 to a contact 102 (two-wheel drive side). The control logic 200 outputs a two-wheel drive command, and turns ON a lamp 104 and turns OFF other lamps 106 and 108 through a lamp indication unit 103, resulting in the two-wheel drive mode. In the present condition, therefore, the two-wheel drive control is continued.

Fig. 4B is a diagram showing the operation when the selector switch 101 is set to a contact 105 (four-wheel drive side). The control logic 200 outputs a four-wheel drive command, and turns OFF the lamp 104 and turns ON the lamp 106 continuously through the lamp indication unit 103, resulting in the four-wheel drive automatic control mode.

Although the details will be mentioned later, in the four-wheel drive automatic control, the control logic 200 turns ON the lamp 108 to indicate the four-wheel drive control at a time point t0 when the determination condition for selecting the four-wheel drive control is satisfied. Further, at a time point t1 when the determination condition for selecting the two-wheel drive control is satisfied, the control logic 200 turns OFF the lamp 108 and leaves the lamp 106 ON to indicate the designation for the four-wheel drive automatic control. When the determination condition for selecting the four-wheel drive control is satisfied again at a time point t2, the lamp 108 turns ON. Further, if the four-wheel drive continuous control is determined as a result of determination of the four-wheel drive continuous control, the lamp 108 is blinked. In this manner, the control logic 200 controls the lighting condition of the lamp 108 according to the actual drive mode.

Fig. 4C is a diagram showing the operation when the selector switch 101 is set to the contact 105 (four-wheel drive side) to output a four-wheel drive automatic command and the driver turns ON a switch 107 to output a four-wheel drive continuation command during the four-wheel drive automatic control. The designation of the four-wheel drive automatic control is indicated by turning ON the lamp 106. Since the time point t0 when the determination condition for selecting the four-wheel drive control is satisfied until a time point t3, the drive mode is the four-wheel drive automatic control and therefore the lamp 108 turns ON. When the driver turns ON the switch 107 at the time point t3, the drive mode is changed to the four-wheel drive continuous control and the lamp 108 blinks and turns ON to notify the driver of the four-wheel drive continuous control. Although the details on the four-wheel drive continuous control will be mentioned later, the four-wheel drive automatic control is selected at a time point t4 when the determination condition for terminating the four-wheel drive continuous control is satisfied, and then either the four-wheel drive control or the two-wheel drive control is selected based on the determination condition for selecting four-wheel drive or two-wheel drive. Referring to Fig. 4C, at the time point t4, the two-wheel drive control is selected and the lamp 108 turns OFF and the lamp 106 remains ON.

If the driver turns ON the switch 107 to request the continuation of four-wheel drive, it is assumed that the vehicle is climbing up an upslope, running on a road having a low road surface friction coefficient µ (hereinafter referred to as low-µ road), or running on a road having successive curve sections. The reason is as follows:

Generally, the determination condition for shifting from the four-wheel drive automatic control to the two-wheel drive control includes accelerator switch OFF, restoration from a skid, and upper limit wheel speed.

Therefore, when skid dissolves and the determination condition is satisfied on an upslope or a low-µ road, the driver may feel dissatisfied with the hill-climbing force. Further, if the vehicle skids again, the behavior thereof becomes unstable causing a feeling of insecurity of the driver during a time delay until four-wheel drive is selected.

Further, when the determination condition of the vehicle speed is satisfied on an upslope, the feeling of acceleration is suddenly lost and changeover between two-wheel drive and four-wheel drive based on a vehicle speed condition is repeated, causing a feeling of discomfort of the driver.

Further, on an upslope having curve sections, the driver controls the vehicle speed by frequently depressing and releasing the accelerator pedal, and therefore, changeover between two-wheel drive and four-wheel drive is repeated based on the determination condition of the accelerator switch, resulting in unstable running when the accelerator pedal is depressed.

In order to improve the above-mentioned situation, the continuation of four-wheel drive is designated by driver's intention to prevent overload of the motor in the four-wheel drive continuous control.

The operation of the control logic 200 of the four-wheel drive control unit according to the present embodiment will be explained below with reference to Fig. 5.

Fig. 5 is a flow chart showing operations of the control logic of the four-wheel drive control unit according to the first embodiment of the present invention.

The control logic 200 determines the status of the selector switch 101 in Step 201. When the selector switch 101 is set to the contact 102 (two-wheel drive side), the control logic 200 continuously turns ON the lamp 104 and turns OFF the lamp 106 to indicate two-wheel drive in Step 202. Two-wheel drive control 210 is selected and the vehicle runs in the two-wheel drive control mode only with the engine 1. The control logic 200 turns OFF lamp 108 and sets the four-wheel drive continuation flag to OFF. In this case, the two-wheel drive control is continued unless the driver operates the selector switch 101. Such two-wheel drive control is selected when the driver determines a road having a high road surface friction coefficient (hereinafter referred to as high-µ road) free from skid or a flat road without upslopes. In particular, the two-wheel drive control is frequently selected with a dry road surface in summertime.

When the selector switch 101 is set to the contact 105 (four-wheel drive side) in Step 201, the control logic 200 continuously turns ON the lamp 106 and turns OFF the lamp 104 to indicate the four-wheel drive automatic control in Step 203.

In Step 204, the control logic 200 determines whether or not the four-wheel drive continuous control is currently being selected based on the ON/OFF status of the four-wheel drive continuation flag. When OFF, the control logic 200 performs the four-wheel drive automatic control processing in Step 220.

In the four-wheel drive automatic control processing of Step 220, the control logic 200 initially determines whether or not the four-wheel drive continuous control is necessary according to the road condition of the vehicle in Step 221. If the four-wheel drive continuous control is judged to be necessary, the control logic 200 sets the four-wheel drive continuation flag to ON in Step 225; otherwise, the control logic proceeds to Step 224.

In Step 220, the control logic 200 determines that the four-wheel drive continuous control is required in the following cases: 1) a slope with successive curve sections, 2) an alternate repetition of low-µ and high-µ roads, and 3) an alternate repetition of upslopes and downslopes on a straight road.
1) A slope with successive curve sections may possibly be an upslope with successive curve sections or a downslope with successive curve sections. In the case of an upslope with successive curve sections, the accelerator opening turns ON at a straight section, turns OFF at a curve section, and then turns ON again at another straight section. In simple four-wheel drive automatic control, the vehicle runs with four-wheel drive at a straight section, the accelerator opening turns OFF and two-wheel drive is selected at a curve section, and then four-wheel drive is restored at another straight section. When four-wheel drive is selected, even if the clutch is mechanically engaged, it takes time until the rotational speed of the motor reaches the wheel speed, resulting in insufficient response and making it impossible to obtain intended acceleration regardless of the acceleration operation by the driver. With the present embodiment, on the other hand, the four-wheel drive continuous mode is judged when the control logic 200 determines the road condition of the vehicle as an upslope with successively curve sections. The control logic 200 determines an upslope with successive curve sections based on the accelerator opening and steering angle shown in Fig. 2. Specifically, the accelerator opening increases at a straight section and becomes zero at a curve section because the accelerator pedal is released. Therefore, it is possible to determine that acceleration and deceleration are repeated by monitoring the variation of the accelerator opening and that the vehicle enters a curve section by recognizing a non-zero steering angle. In this manner, it is possible to determine an upslope with successive curve sections from the accelerator opening and the steering angle. Further, as another method, it is possible to determine an upslope having successive curve sections from car navigation information. Further, as still another method, it is possible to determine whether or not the vehicle is on an upslope from a tilt angle detected by a tilt angle sensor and whether or not the vehicle is at a curve section from the transverse acceleration of a G sensor. This also applies to a downslope having successive curve sections.
2) An example of an alternate repetition of low-µ and high-µ roads can be seen with snowy roads in urban and mountain areas, where a sunny section and a shaded section are alternately repeated. The shaded road surface is covered by compacted snow yielding low µ while the sunny road surface is covered by melted snow yielding high µ. With simple four-wheel drive automatic control, a skid occurs and the vehicle runs with four-wheel drive on a low-µ road, and skid dissolves and it runs with two-wheel drive on a high-µ road, resulting in a repetition of four-wheel drive and two-wheel drive. If four-wheel drive and two-wheel drive are repeated in this manner, the behavior of the vehicle in response to steering as well as a feelings of acceleration in response to accelerator operation differ for each drive. With the present embodiment, on the other hand, the four-wheel drive continuous mode is judged when the control logic 200 determines the road condition of the vehicle as an alternate repetition of low-µ and high-µ roads. The control logic 200 determines an alternate repetition of low-µ and high-µ roads based on the wheel speeds of the four wheels and the outside temperature shown in Fig. 2. Specifically, it is possible to determine a shaded or sunny section because the outside temperature is low in the shaded section and high in the sunny section. Further, a skid of a front wheel can be detected from the wheel speed of the front wheels. If a skid occurs at low outside temperature and then dissolves at high outside temperature and this sequence is alternately repeated, it is possible to determine an alternate repetition of low-µ and high-µ roads.
3) An example of an alternate repetition of upslopes and downslopes on a straight road can be seen with straight roads in hilly districts. In this case, the accelerator opening turns ON at an ascending section, turns OFF at a descending section, and then turns ON again at another ascending section. In simple four-wheel drive automatic control, the vehicle runs with four-wheel drive on an ascending section, the accelerator opening turns OFF and two-wheel drive is selected at a descending section, and then four-wheel drive is restored at another ascending section. When four-wheel drive is selected, even if the clutch is mechanically engaged, it takes time until the rotational speed of the motor reaches the wheel speed, resulting in insufficient response and making it impossible to obtain intended acceleration regardless of the acceleration operation by the driver. With the present embodiment, on the other hand, the four-wheel drive continuous mode is judged when the control logic 200 determines the road condition of the vehicle as an alternate repetition of upslopes and downslopes on a straight road. The control logic 200 determines an alternate repetition of upslopes and downslopes on a straight road based on the vehicle speed calculated from the wheel speeds of the four wheels shown in Fig. 2. The vehicle speed can be calculated from an average of rear wheel speeds or an average of four wheel speeds. It is possible to determine a repetition of upslopes and downslopes from the fact that the vehicle speed repetitively increases and decreases.

When the control logic 200 determines that the four-wheel drive continuous control is not necessary in Step 221 of Fig. 5, the control logic 200 determines in Step 224 whether or not the switch 107 of Fig. 3 is set to ON. When the switch 107 is set to ON, the control logic 200 sets the four-wheel drive continuation flag to ON in Step 225; otherwise, the control logic proceeds with Step 230.

When the switch 107 is set to OFF, the determination processing of the running condition is performed in Step 230. Specifically, in Step 231, the control logic 200 determines whether the accelerator switch is ON or OFF, i.e., whether or not the accelerator opening is zero. Further, the control logic 200 determines whether a skid is detected in Step 232. If a front wheel speed is larger than a rear wheel speed out of the wheel speeds of the four wheels, it is possible to determine that a front wheel skids. Then, in Step 233, the control logic 200 determines whether the vehicle speed is larger than a setup value VA. Under conditions that the accelerator switch is ON (the accelerator opening not zero), a skid is detected, and the vehicle speed is not greater than the setup value VA, the four-wheel drive control is selected in Step 222. If any one condition is not satisfied, the two-wheel drive control is selected in Step 210.

With the four-wheel drive control of Step 222, the control logic 200 sets command values for controlling the armature current and field current of the motor 5 to be mentioned later to perform rotational control of the motor. Four-wheel drive control also includes a standby operation for operating the relay 7 and the clutch 4. The control logic 200 continuously turns ON the lamp 108 to indicate that the four-wheel drive control is actually selected.

During the four-wheel drive automatic control, unless the control logic 200 detects in Step 223 that the driver operated the switch 107, OFF is selected and the four-wheel drive automatic control continued.

During continuation of the four-wheel drive automatic control, if the driver sets the switch 107 to ON to request the continuation of four-wheel drive, ON is selected in Step 223 resulting in the four-wheel drive continuous control of Step 240.

If the driver wants to give priorities on the determination of the road surface condition by the driver himself or herself while the vehicle is stopped, or stably accelerate the vehicle based on his or her own feeling, the driver may desire four-wheel drive at the following start and running. In order to cope with this situation, the control logic 200 determines the status of the switch 107 in Step 224 even before the vehicle is started. When the control logic 200 determines the status of the switch 107 in Step 224 and, when the result is ON, sets the four-wheel drive continuation flag to ON in Step 225. Then, in the four-wheel drive control of Step 222, control of the motor is enabled by the standby operation for operating the relay 7 and the clutch 4. Even if the status of the switch 107 is judged to be OFF in Step 223, the four-wheel drive continuation flag has already been set to ON in Step 225. Therefore, ON is selected in the determination processing of the four-wheel drive continuation flag in Step 204, allowing the four-wheel drive continuous control of Step 240 to be selected.

In the four-wheel drive continuous control of Step 240, the control logic 200 first determines in Step 241 whether or not a motor temperature measurement value Tm measured in the motor temperature rise limit control of Step 400 (to be mentioned later) exceeds a limit value specification Tmlimit. If the result is NO, the control logic proceeds with the determination of the following Step 242 to determine whether or not four-wheel drive duration setup value Ktm set in the motor temperature rise limit control of Step 400 exceeds a four-wheel drive duration measurement value tm. If the result is NO, the control logic 200 performs the motor temperature rise limit control of Step 400 together with the four-wheel vehicle speed limit control of Step 500 in order to continue the four-wheel drive continuous control. Then, in Step 243, the control logic 200 sets the four-wheel drive continuation flag to ON and turns ON and blinks the lamp 108 as shown in Fig. 4C to indicate that the four-wheel drive continuous control is selected.

Since the determination result of Step 204 is ON by setting the four-wheel drive continuation flag to ON, the four-wheel drive automatic control of Step 220 is canceled and four-wheel drive continuous control 240 continued, without subsequently executing the determination processing by the switch 107 in Steps 223 and 224.

If the motor temperature reaches the limit value specification Tmlimit or if the four-wheel drive duration setup value Ktm has elapsed, the four-wheel drive continuous control has reached a limit and therefore YES is selected as the determination result of Steps 241 and 242. Then, the control logic 200 sets the four-wheel drive continuation flag to OFF in Step 244 to shift to the four-wheel drive automatic control of Step 220.

In the four-wheel drive system which drives the rear wheels with the motor 5, the motor 5 does not have any design value that may satisfy the power capacity or the rotational speed capacity over the entire vehicle speed range necessary to constantly perform four-wheel drive. In this case, it is necessary to provide a limit within a range not exceeding these capacities in order to continue four-wheel drive.

Control for limiting temperature rise of the motor to maximize the duration of the four-wheel drive continuous control is the motor temperature rise limit control of Step 400, specifically, control for reducing the motor armature current.

A method of controlling the armature current and the field current of the DC motor 5 at the time of four-wheel drive with the four-wheel drive control unit according to the present embodiment will be explained below with reference to Figs. 6 to 9.

Fig. 6 is a block diagram showing a configuration of the motor control unit of the four-wheel drive control unit according to the first embodiment of the present invention.

As shown in Fig. 6, the motor control unit 300 comprises a motor field current calculation unit 311, a motor armature current calculation unit 321, a multiplier 324, and subtractors 325 and 326.

The motor field current calculation unit 311 obtains a field current command value from an inputted motor rotational speed. The subtractor 325 detects a difference between a motor field current command value calculated by the motor field current calculation unit 311 and an actual field current flowing in the field winding of the motor 5. Based on the difference, the motor control unit 300 outputs a PWM signal for performing duty control of an H bridge in a drive circuit for driving the motor 5. In the four-wheel drive continuous control, the field current is not operated.

Further, the motor armature current calculation unit 321 calculates an armature current command value imp with which an inputted motor torque target value can be obtained. The multiplier 324 multiplies the armature current command value imp by the current limitation coefficient Kim, and outputs an armature current command value imp' after correction. The subtractor 326 detects a difference between the armature current command value imp' outputted by the multiplier 324 and the actual armature current flowing in the armature winding of the motor 5. Based on the difference, the motor control unit 300 varies the field current of the AC alternator 2 to control the generating capacity thereof.

In regular four-wheel drive control wherein the motor temperature rise limit control of Step 400 does not operate, the current limitation coefficient Kim is 1 and the AC alternator 2 is controlled according to the output of the armature current calculation unit 321.

In the four-wheel drive continuous control of Step 230 wherein the motor temperature rise limit control of Step 400 operates, the armature current reduction coefficient Kim is inputted and then multiplied by the command value imp. Since the reduction coefficient Kim is smaller than 1, a final armature current command value imp', i.e., Kim multiplied by imp, becomes smaller than the command value imp calculated by the armature current calculation unit 321. Then, the motor armature current is controlled to the command value imp' by means of power generation control of the driving high-power alternator 2 directly connected to the armature, making it possible to limit temperature rise of the motor.

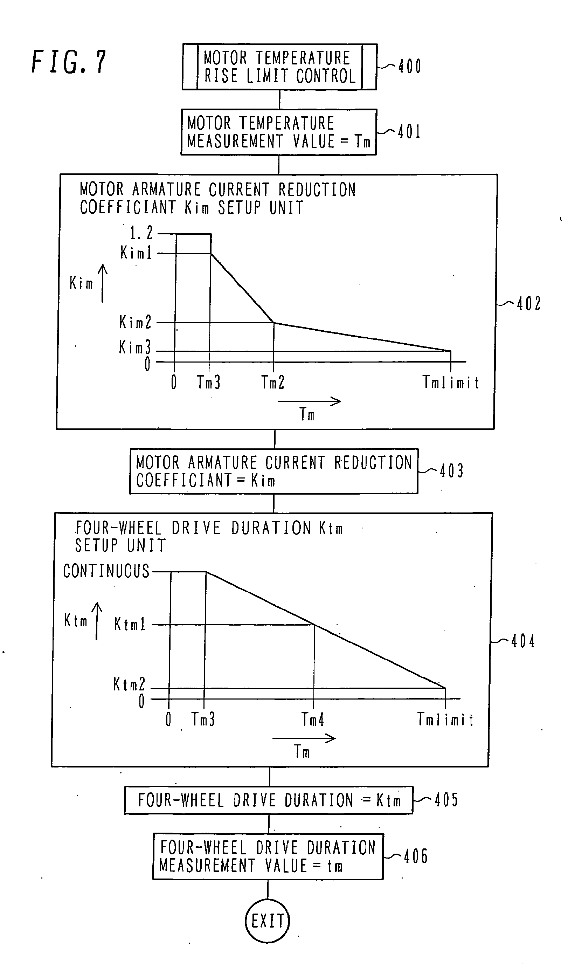

Details of the motor temperature rise limit control and the four-wheel vehicle speed limit control in the four-wheel drive control unit according to the present embodiment will be explained below with reference to Figs. 7 to 9.

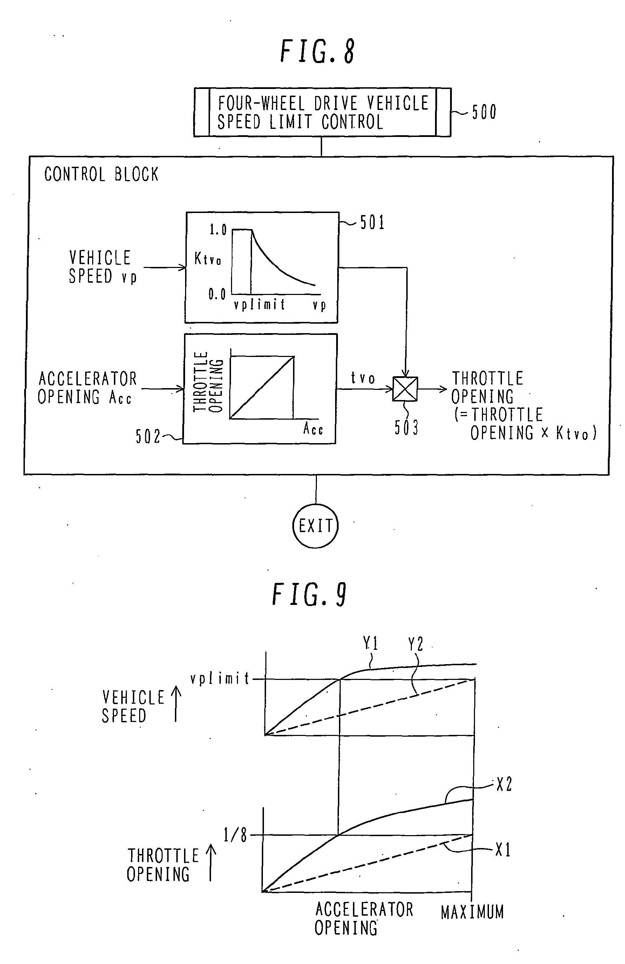

Fig. 7 is a flow chart showing details of the motor temperature rise limit control in the four-wheel drive control unit according to the first embodiment of the present invention. Fig. 8 is a control block diagram showing details of the four-wheel vehicle speed limit control in the four-wheel drive control unit according to the first embodiment of the present invention. Fig. 9 is a diagram showing characteristics of the four-wheel vehicle speed limit control in the four-wheel drive control unit according to the first embodiment of the present invention.

First, the details of the motor temperature rise limit control of Step 400 of Fig. 5 will be explained below with reference to Fig. 7.

In the motor temperature rise limit control, in order to limit temperature rise of the motor, the armature current reduction coefficient Kim is set according to the motor temperature measurement value Tm to reduce the armature current.

In Step 401, the control logic 200 measures the temperature of the motor 5 and memorizes it as the motor temperature measurement value Tm.

Then, in Step 402, the control logic 200 sets the current reduction coefficient Kim in relation to the motor temperature measurement value Tm. The maximum value of the current reduction coefficient Kim is 1.0. As the motor temperature measurement value Tm of the motor 5 increases, the current reduction coefficient Kim is decreased (smaller than 1.0) to reduce the armature current command value.

When the motor temperature measurement value Tm reaches Tm1, the current reduction coefficient Kim is decreased to Kim1. When the motor temperature measurement value Tm increases from Tm1 to Tm2, the current reduction coefficient is linearly decreased from Kim1 to Kim2. When the motor temperature measurement value Tm increases from Tm2 to Tmlimit, the current reduction coefficient is linearly decreased from Km2 to Km3. Tmlimit is a design maximum allowable temperature, and the current reduction coefficient at this temperature is Kim3.

Then, in Step 403, the motor armature current reduction coefficient = Kim is memorized.

While the vehicle is running, depending on the weather condition such as rainstorm, snowfall, etc., the four-wheel drive continuous control may be continued with motor temperature rise (temperature measurement value) less than the maximum allowable temperature Tmlimit. In this case, although the thermal capacity of the motor does not exceed the design value, there arises an increase in thermal load to the H bridge composed of semiconductor power elements for controlling the driving high-power alternator 2 and the field current, as well as to the clutch 4 for engaging the motor and a rear-wheel drive shaft.

Then, in Step 404, the control logic 200 sets four-wheel drive duration setup value Ktm in relation to the motor temperature measurement value Tm. When the motor temperature measurement value Tm is less than Tm3, the current reduction coefficient is constant; when it increases from Tm3 to Tmlimit, the coefficient is linearly decreased. For example, when Tm is Tm4, the duration time setup is Ktm1; when Tm is Tmlimit, it is Ktm2.

Then, in Step 405, four-wheel drive duration setup value = Ktm is memorized.

Further, in Step 406, four-wheel drive duration measurement value = tm is memorized.

The armature current reduction coefficient Kim obtained through the motor temperature rise limit control of Step 400 is inputted by the above-mentioned motor control unit 300 of Fig. 6 and multiplied by the armature current command value imp outputted by the armature current calculation unit 321. The result is the actual armature current command value imp' used to reduce the armature current.

Further, the motor temperature measurement value Tm, the four-wheel drive duration measurement value tm, and the four-wheel drive duration setup value Ktm are inputs for Steps 231 and 232 in the four-wheel drive continuous control of Step 230 in the control logic unit 200 of Fig. 4, and are used to determine the changeover to the two-wheel drive control.

Then, the four-wheel vehicle speed limit control of Step 500 will be explained below with reference to Figs. 8 and 9.

As understood from the four-wheel drive automatic control of Step 220 of Fig. 5, the condition of four-wheel drive involving motor drive is that the vehicle speed is not greater than a setup value vA (Step 233). Since this means that the motor rotational speed at the time of four-wheel drive is limited, it is necessary to maintain a vehicle speed that does not exceed an upper limit value of the motor rotational speed in the four-wheel drive continuous control. The setup value vA is about 30 km/h in the case of an electric four-wheel drive vehicle and 60 km/h in the case of a hybrid vehicle.

With the present embodiment, the vehicle speed is limited by controlling the opening of the throttle valve for controlling the amount of suction air of the engine. In particular, the present embodiment is explained with an electric throttle system (not shown) which drives the motor directly connected with the throttle through an accelerator signal, rather than by connecting the accelerator pedal and the throttle with a wire.

Referring to Fig. 8, when a vehicle speed vp reaches a vehicle speed limit setup value vplimit for four-wheel drive, a vehicle speed limitation coefficient Ktvo setup block 501 decreases a limitation coefficient Ktvo from 1.0 before output.

On the other hand, a throttle opening request command setup block 502 outputs a throttle opening Tvo which linearly changes with respect to an inputted accelerator opening Acc.

A multiplication block 503 limits the vehicle speed by recognizing a throttle opening which is the throttle opening Tvo multiplied by the limitation coefficient Ktvo.

The solid lines of Fig. 9 show the result of a case where the vehicle sped is limited by the throttle opening. When the throttle opening for setting the vehicle speed limit setup value vplimit is controlled to about 1/8, throttle opening linearly changes with respect to the accelerator opening up to throttle opening 1/8 as shown by a solid line X2. With the throttle opening larger than 1/8, the change rate of the accelerator opening is decreased with respect to the change rate of throttle opening, thereby gradually increasing the accelerator opening. As a result, the vehicle speed linearly increases up to the vehicle speed limit setup value vp1imit as shown by the solid line Y1. With the vehicle speed larger than the vehicle speed limit setup value vplimit, the vehicle speed increases more gently than previous increase rate, thereby limiting the vehicle speed.

Referring to Fig. 8, although the throttle opening is limited by setting the vehicle speed limit setup value vplimit, it is also possible to directly limit the throttle opening with respect to the accelerator opening without detecting the vehicle speed. Control result in this case is shown by the dashed lines in Fig. 9. The throttle opening with respect to the maximum accelerator opening is limited to 1/8 (dashed line X1) and the wheel speed is also limited to the vehicle speed limit setup value vplimit (dashed line Y2).

The configuration of the switch determination unit 100 is not limited to the configuration of Fig. 3 as long as the driver can select three different selection means to generate a two-wheel drive command, a four-wheel drive automatic command, and a four-wheel drive continuation command. Further, the configuration of the lamps is not limited to the configuration of Fig. 3 as long as it is possible to distinguish between the two-wheel drive command, the four-wheel drive automatic command, and the four-wheel drive continuation command. For example, it is also possible to provide another lamp for the four-wheel drive continuous control. Further, the two-wheel drive command and the four-wheel drive automatic command are indicated by the lamps 104 and 106, respectively. However, in addition to electrical indication, it is also possible that switch positions be mechanically determined allowing visual confirmation.

Further, the selector switch 101 forms a determination logic of the two-wheel drive command on the side of the contact 102. However, it is also possible that the contact 102 is omitted, i.e., the two-wheel drive command is not outputted as an electrical signal. Further, it is also possible that the determination logic is not connected to the side of the contact 105, i.e., the two-wheel drive command is not outputted as an electrical signal.

Further, in the determination of running condition of Step 230 of Fig. 5, the control logic 200 determines the changeover from four-wheel to two-wheel drive from the ON/OFF status of the accelerator switch in Step 231. However, the means for determination is not limited to the switch, and it is also possible to set a threshold value of the accelerator output value and determine the changeover through comparison of the accelerator output with the threshold value.

Further, referring to Fig. 5, the two-wheel drive command is outputted when the driver sets the selector switch 101 to the contact 102 (two-wheel drive side). However, it is also possible to omit the selector switch 101, depending on the vehicle or destination, to cancel the forced two-wheel drive command, and select two-wheel drive only when the determination conditions of Steps 231, 232, and 233 are satisfied in the determination processing of the running condition of Step 230 in the four-wheel drive automatic control of Step 220. This method ensures four-wheel drive even if the driver forgets to operate the selector switch 101.

Further, referring to Fig. 5, if the switch 107 is turned ON when the wheel speed is judged to be zero in Step 221, the control logic 200, when the determination result of Step 224 is ON, sets the four-wheel drive continuation flag to ON in Step 225 to select the four-wheel drive continuous control of Step 240. However, if the vehicle is stopped (zero vehicle speed) for a prolonged period of time, the power is wastefully supplied to the relay 7 and the clutch 4. Then, when the vehicle speed remains zero for a certain period of time or longer, the control logic 200 sets the four-wheel drive continuation flag to OFF and restores the four-wheel drive automatic control of Step 220 to turn OFF the relay 7 and the clutch 4, thereby remarkably saving the power.

Further, in the vehicle speed limit control in the four-wheel drive continuous control, the throttle opening is limited to indirectly limit the motor rotational speed within an allowable range. As another embodiment, it is also possible to directly limit the motor rotational speed to continuously control four-wheel drive within the allowable range. Further, depending on the shift position of the vehicle, it is also possible to use the vehicle speed limit control together with the motor rotational speed control.

Further, as shown in Fig. 1, a DC motor is used as a driving source of the rear wheels. However, the present method is also applicable to four-wheel drive by use of an AC motor as well as four-wheel drive by use of a DC motor.

As explained above, in accordance with the present embodiment, it is possible to provide three different control modes: the two-wheel drive mode; the four-wheel drive automatic control mode in which four-wheel drive and two-wheel drive can be changed over through the determination of running condition and four-wheel drive can be continued; and the four-wheel drive continuous control mode in which the four-wheel drive control selected by driver's intention can be continued. This configuration makes it possible to perform appropriate four-wheel drive control, thereby dissolving a feeling of insufficient running stability and acceleration, as well as a feeling of discomfort caused by changeover between four-wheel drive and two-wheel drive.

Further, since the driver can select a desired control mode, the degree of freedom of four-wheel drive is improved.

Further, in the four-wheel drive continuous control, an overload condition is not caused by driving the motor within an allowable temperature range and an allowable rotational speed range.

Further, since regular four-wheel drive automatic control and the four-wheel drive continuous control are distinctively indicated, it is possible to visually notify the driver of the running performance attained by reducing the motor current and limiting the vehicle speed in the four-wheel drive continuous control.

Further, in a case of dry road surface in summertime and in a case where the driver determines a road having a high road surface friction coefficient free from skid or a flat road without upslopes, the driver can select the two-wheel drive control with a switch. This makes it possible to eliminate accompanying rotation of the clutch 4 or the motor 5 and reduce the friction, thereby improving the fuel efficiency.

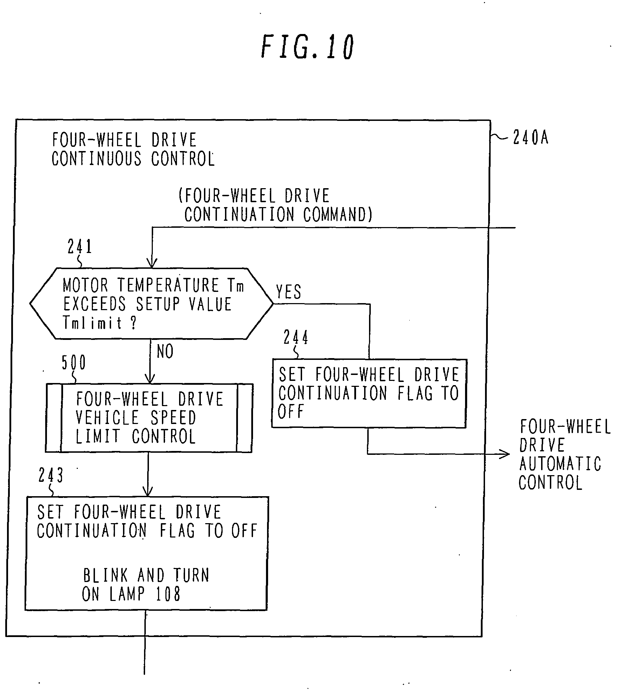

The operation of a four-wheel drive system according to a second embodiment of the present invention will be explained below with reference to Fig. 10. The configuration of a four-wheel drive vehicle using the four-wheel drive system according to the present embodiment is the same as that of Fig. 1. Further, the configuration of the four-wheel drive control unit for forming the four-wheel drive system according to the present embodiment is the same as that of Fig. 2. Further, the configuration and operations of the switch determination unit 100 of the four-wheel drive control unit according to the present embodiment are the same as those of Figs. 3 and 4. Further, the method of controlling the armature current and the field current of the DC motor 5 at the time of four-wheel drive in the four-wheel drive control unit according to the present embodiment is the same as that of Figs. 6 to 9.

Although the operation of the control logic 200 of the four-wheel drive control unit according to the present embodiment is basically the same as that of Fig. 5, the details of the four-wheel drive continuous control of Step 240 have partially been modified to the four-wheel drive continuous control of Step 240A, as explain below.

Fig. 10 is a flow chart showing details of the four-wheel drive continuous control performed by the four-wheel drive system according to the second embodiment of the present invention.

Temperature rise of the motor is affected by the outside temperature as well as self-heating. Since the outside temperature is low in the winter or cold districts, it may not be necessary to reduce the armature current of the motor. Fig. 10 shows an embodiment in the above case.

Referring to Fig. 10, in the logic of the four-wheel drive continuous control of Step 240A, the motor temperature rise limit control of Step 400 of Fig. 5 is omitted. Therefore, the logic is composed only of the four-wheel vehicle speed limit control of Step 500. Referring to Fig. 10, after the four-wheel drive continuation command is determined, the motor temperature measurement value Tm of the motor is compared with the maximum allowable temperature Tmlimit in Step 241. If the result is Tm>Tm1mit, the two-wheel drive control is selected to protect the motor; otherwise, the four-wheel drive continuous control is performed by means of the four-wheel vehicle speed limit control of Step 500.

In the example of Fig. 10, four-wheel drive duration is not set, and therefore, if the driver feels it unnecessary to select the four-wheel drive control, the driver can select the two-wheel drive control by setting the selector switch 101 of Fig. 3 to the contact 102 (two-wheel drive side).

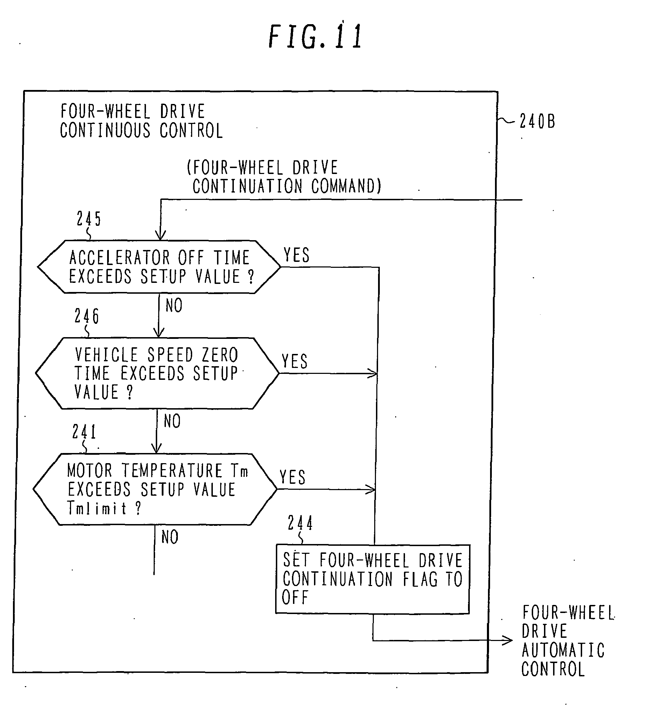

The operation of a four-wheel drive system according to a third embodiment of the present invention will be explained below with reference to Fig. 11. The configuration of a four-wheel drive vehicle using the four-wheel drive system according to the present embodiment is the same as that of Fig. 1. Further, the configuration of the four-wheel drive control unit for forming the four-wheel drive system according to the present embodiment is the same as that of Fig. 2. Further, the configuration and operations of the switch determination unit 100 of the four-wheel drive control unit according to the present embodiment are the same as those of Figs. 3 and 4. Further, the method of controlling the armature current and the field current of the DC motor 5 at the time of four-wheel drive in the four-wheel drive control unit according to the present embodiment is the same as that of Figs. 6 to 9.

Although the operation of the control logic 200 of the four-wheel drive control unit according to the present embodiment is basically the same as that of Fig. 5, the details of the four-wheel drive continuous control of Step 240 have partially been modified to the four-wheel drive continuous control of Step 240B, as explain below.

Fig. 11 is a flow chart showing details of the four-wheel drive continuous control performed by the four-wheel drive system according to the third embodiment of the present invention.

The present embodiment adds a logic for shifting to the four-wheel drive automatic control of Step 220 of Fig. 5 from the four-wheel drive continuous control of Step 240 when the driver will not accelerate or when the vehicle is stopped at zero vehicle speed.

In the four-wheel drive continuous control of Step 240B, Step 245 determines that the driver will not accelerate because the accelerator is OFF for more than a setup time. In this case, the control logic sets the four-wheel drive continuation flag to OFF in Step 244 and then shifts to the four-wheel drive automatic control of Step 220. A case where the accelerator is not OFF more than the setup time refers to a case where the accelerator is temporarily turned OFF when the vehicle is running at a curve section of an upslope. In this case, the control logic continues the four-wheel drive continuous control.

Further, Step 246 determines that the vehicle is stopped for more than a setup time at zero vehicle speed. In this case, the control logic sets the four-wheel drive continuation flag is set to OFF in Step 244 and then shifts to the four-wheel drive automatic control of Step 220. A case where the vehicle is not stopped more than the setup time at zero vehicle speed refers to a case where the vehicle is temporarily stopped in traffic congestion. In this case, the control logic continues the four-wheel drive continuous control.

If the above-mentioned determination condition is not satisfied, the control logic proceeds with the determination of Step 241 and then subsequently performs the four-wheel drive continuous control in the same manner as Fig. 5.

With the present embodiment, even if the accelerator is temporarily turned OFF at a curve section of an upslope or the vehicle is temporarily stopped in traffic congestion, it is possible to continue four-wheel drive by subsequently depressing the accelerator pedal.

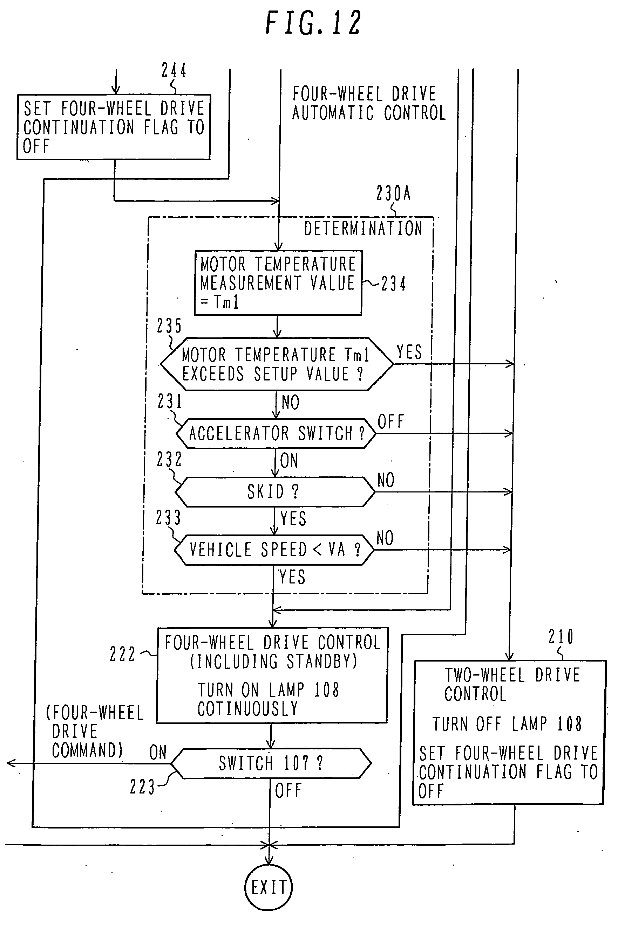

The operation of a four-wheel drive system according to a fourth embodiment of the present invention will be explained below with reference to Fig. 12. The configuration of the four-wheel drive vehicle using the four-wheel drive system according to the present embodiment is the same as that of Fig. 1. Further, the configuration of the four-wheel drive control unit for forming the four-wheel drive system according to the present embodiment is the same as that of Fig. 2. Further, the configuration and operations of the switch determination unit 100 of the four-wheel drive control unit according to the present embodiment are the same as those of Figs. 3 and 4. Further, the method of controlling the armature current and the field current of the DC motor 5 at the time of four-wheel drive in the four-wheel drive control unit according to the present embodiment is the same as that of Figs. 6 to 9.

Although the operation of the control logic 200 of the four-wheel drive control unit according to the present embodiment is basically the same as that of Fig. 5, the details of the four-wheel drive automatic control of Step 220 have partially been modified to the four-wheel drive automatic control of Step 220A, as explain below.

Fig. 12 is a flow chart showing a part of the four-wheel drive automatic control performed by the four-wheel drive system according to the fourth embodiment of the present invention.

After the four-wheel drive automatic control is selected through processing of Step 244 because the motor temperature exceeds a setup value in the four-wheel drive continuous control of Step 240 of Fig. 5, in the four-wheel drive automatic control of Step 220 of Fig. 5, if the determination conditions for four-wheel drive changeover of Steps 231, 232, and 233 are satisfied in the determination of running condition of Step 230, the four-wheel drive control is selected again, resulting in an overload condition of the motor.

On the other hand, the present embodiment adds Step 235 in the determination processing of Step 230A. If the measurement temperature value Tm1 of the motor exceeds a setup value in Step 235, the control logic 200 shifts to the condition of the motor.

On the other hand, the present embodiment adds Step 235 in the determination processing of Step 230A. If the measurement temperature value Tm1 of the motor exceeds a setup value in Step 235, the control logic 200 shifts to the two-wheel drive control of Step 210, thereby avoiding the overload condition of the motor. After the motor temperature falls below the setup value, the four-wheel drive control can be restored if the determination conditions of Steps 231, 232, and 233 are satisfied.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A vehicle drive system provided on a vehicle which runs by the changeover between a first drive mode in which first wheels are driven by first power of an internal combustion engine and a second drive mode in which the first wheels are driven by the first power and second wheels different from the first wheels are driven by second power obtained from output power of an in-vehicle power supply, the vehicle drive system comprising:
a motor for generating the second power; and
a control unit for controlling the motor drive;
wherein, when the driver issues a request command for continuing the second drive mode or when the road condition of the vehicle changes, said control unit controls the motor drive so as to continue the vehicle running by the second drive mode.

2. The vehicle drive system according to Claim 1,
wherein:
said control unit inputs an output signal from an operating device operated by the driver and determines whether or not the request command for continuing the second drive mode is issued.

3. The vehicle drive system according to Claim 1,
wherein the motor temperature is inputted to said control unit as detection information; and
wherein, when the temperature exceeded a setup value, said control unit controls the motor drive so as to cancel the continuation of the vehicle running by the second drive mode.

4. The vehicle drive system according to Claim 1,
wherein said control unit includes an indication controller which outputs an indication command to an indicator for indicating the drive mode of the vehicle; and
wherein the indication controller outputs an indication command to the indicator so that the indication method of the indicator differs between a case where the second drive mode is performed and a case where the second drive mode is continued.

5. The vehicle drive system according to Claim 1,
wherein:
when a slope with successive curve sections is determined as a case of road condition change, said control unit controls the motor drive so as to continue the vehicle running by the second drive mode.

6. The vehicle drive system according to Claim 1,
wherein:
when an alternate repetition of low-µ and high- µ roads is determined as a case of road condition change, said control unit controls the motor drive so as to continue the vehicle running by the second drive mode.

7. The vehicle drive system according to Claim 1,
wherein:
when an alternate repetition of upslopes and downslopes on a straight road is determined as a case of road condition change, said control unit controls the motor drive so as to continue the vehicle running by the second drive mode.

8. The vehicle drive system according to Claim 1,
wherein:
when the motor temperature reaches or exceeds a predetermined temperature while said control unit is controlling the motor drive so as to continue the vehicle running by the second drive mode, said control unit reduces the motor torque.

9. The vehicle drive system according to Claim 1,
wherein:
said control unit limits the drive time of said motor while it is controlling the motor drive so as to continue the vehicle running by the second drive mode.

10. The vehicle drive system according to Claim 1,
wherein:
when the motor temperature exceeds a predetermined temperature while said control unit is controlling the motor drive so as to continue the vehicle running by the second drive mode, said control unit terminates the motor drive control for continuing the vehicle running by the second drive mode.

11. The vehicle drive system according to Claim 1,
wherein:
when the time period of the motor drive control for continuing the vehicle running by the second drive mode exceeds a setup time, said control unit terminates the motor drive control for continuing the vehicle running by the second drive mode.

12. The vehicle drive system according to Claim 1,
wherein:
when the accelerator opening remains to be equal to or smaller than a setup value for a setup time or longer, said control unit terminates the motor drive control for continuing the vehicle running by the second drive mode.

13. The vehicle drive system according to Claim 1,
wherein:
when the vehicle speed remains to be zero for a setup time or longer, said control unit terminates the motor drive control for continuing the vehicle running by the second drive mode.

14. The vehicle drive system according to Claim 1,
wherein:
when the motor temperature exceeds a setup value while said control unit is controlling the motor drive so as to continue the vehicle running by the second drive mode, said control unit outputs a command signal for limiting the throttle opening of the internal combustion engine with respect to the accelerator opening to a control unit of the internal combustion engine.

15. A vehicle drive system provided on a vehicle which runs by the changeover between a first drive mode in which first wheels are driven by first power of an internal combustion engine and a second drive mode in which the first wheels are driven by the first power and second wheels different from the first wheels are driven by second power obtained from output power of an in-vehicle power supply, the vehicle drive system comprising:
a motor for generating the second power; and
a control unit for controlling the motor drive;
wherein, when the driver issues a request command for continuing the second drive mode or when the road condition of the vehicle changes, said control unit controls the motor drive so as to perform the vehicle running by the second drive mode and continue in a time limit manner the vehicle running by the second drive mode.

16. A vehicle drive system provided on a vehicle which runs by the changeover between a first drive mode in which first wheels are driven by first power of an internal combustion engine and a second drive mode in which the first wheels are driven by the first power and second wheels different from the first wheels are driven by second power obtained from output power of an in-vehicle power supply, the vehicle drive system comprising:
a motor for generating the second power; and
a control unit for controlling the motor drive;
wherein, when the driver issues a request command for continuing the second drive mode or when the road condition of the vehicle changes, said control unit controls the motor drive so as to perform the vehicle running by the second drive mode and continue in a time limit manner the vehicle running by the second drive mode such that the vehicle running is separated from the vehicle running by changeover between the first and second drive modes.

17. A vehicle drive system comprising:
a motor for generating second power for driving second wheels different from first wheels driven by first power of an internal combustion engine; and
a control unit for controlling the motor drive;
wherein, when the driver issues a request command for continuing the drive of the second wheels by the second power or when the road condition of the vehicle changes, said control unit controls the motor drive so as to output the second power from said motor to the second wheels and continue in a time limit manner the output of the second power from said motor to the second wheels.

18. A vehicle drive system comprising:
a motor for generating second power for driving second wheels different from first wheels driven by first power of an internal combustion engine; and
a control unit for controlling the motor drive;
wherein, when the driver issues a request command for continuing the drive of the second wheels by the second power or when the road condition of the vehicle changes, said control unit controls the motor drive so as to output the second power from said motor to the second wheels and continue in a time limit manner the output of the second power from said motor to the second wheels such that the output of the second power is separated from the changeover between the drive of the first wheels by the first power and the drive of the first and second wheels by the first and second power.

19. A vehicle drive system provided on a vehicle which runs by the changeover between a first mode in which the power is transmitted between an internal combustion engine and first wheels and a second mode in which the power is transmitted between the internal combustion engine and the first wheels and between electric machinery operating on an in-vehicle power supply and second wheels, the vehicle drive system comprising:
a rotating electrical machine for forming the electric machinery; and
a control unit for controlling the operation of said rotating electrical machine;
wherein, when the driver issues a request command for continuing the second mode or when the road condition of the vehicle changes, said control unit controls the operation of said rotating electrical machine so as to perform the second mode and continue in time limit manner the second mode.

20. A vehicle drive system provided on a vehicle which runs by the changeover between a first mode in which the power is transmitted between an internal combustion engine and first wheels and a second mode in which the power is transmitted between the internal combustion engine and the first wheels and between electric machinery operating on an in-vehicle power supply and second wheels, the vehicle drive system comprising:
a rotating electrical machine for forming the electric machinery; and
a control unit for controlling the operation of said rotating electrical machine;
wherein, when the driver issues a request command for continuing the second mode or when the road condition of the vehicle changes, said control unit controls the operation of said rotating electrical machine so as to perform the second mode and continue in time limit manner the second mode such that the second mode is separated from the changeover between the first and second modes.
